(19)

**Europäisches Patentamt**
**European Patent Office**
**Office européen des brevets**

(11) **EP 4 598 213 A1**

(12) **EUROPEAN PATENT APPLICATION**
published in accordance with Art. 153(4) EPC

(43) Date of publication:
06.08.2025 Bulletin 2025/32

(21) Application number: 23872906.5

(22) Date of filing: 18.09.2023

(51) International Patent Classification (IPC):
H04W 72/23 (2023.01)    H04W 72/12 (2023.01)
H04W 72/04 (2023.01)    H04W 52/02 (2009.01)
H04W 8/24 (2009.01)    H04W 72/53 (2023.01)
H04W 74/00 (2009.01)

(52) Cooperative Patent Classification (CPC):
H04W 8/24; H04W 52/02; H04W 72/04;
H04W 72/12; H04W 72/23; H04W 72/53;
H04W 74/00

(86) International application number:
PCT/KR2023/014040

(87) International publication number:
WO 2024/071788 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022  KR 20220124614
04.11.2022  KR 20220146502

(71) Applicant: LG Electronics Inc.
Yeongdeungpo-gu
Seoul 07336 (KR)

(72) Inventors:
• AHN, Seungjin
  Seoul 06772 (KR)
• YANG, Suckchel
  Seoul 06772 (KR)
• HWANG, Seunggye
  Seoul 06772 (KR)
• LEE, Youngdae
  Seoul 06772 (KR)
• KIM, Jaehyung
  Seoul 06772 (KR)
• LEE, Sunghoon
  Seoul 06772 (KR)

(74) Representative: Plasseraud IP
104 Rue de Richelieu
CS92104
75080 Paris Cedex 02 (FR)

(54) **DEVICE AND METHOD FOR PERFORMING CROSS SLOT SCHEDULING IN WIRELESS COMMUNICATION SYSTEM**

(57)    In order to perform cross slot scheduling in a wireless communication system, a method of operating a terminal in a wireless communication system may comprise receiving configuration information including information indicating an offset between a physical downlink control channel (PDCCH) and a physical downlink shared channel (PDSCH), configuring a result of adding a value indicated by the configuration information and a predefined value as an offset based on the configuration information indicating an 0-offset, receiving control information through the PDCCH, identifying a slot and resource to which the PDSCH is mapped based on the control information and the offset, and receiving the PDSCH in the identified slot and resource.

**FIG. 8**

## Description

## Technical Field

The following description relates to a wireless communication system, and to a device and method for performing cross slot scheduling in a wireless communication system.

## Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

## Disclosure

## Technical Problem

The present disclosure can provide a device and method for more effectively allocating resources in a wireless communication system.

The present disclosure can provide a device and method for allocating resources to a terminal using a shared channel with a narrow bandwidth in a wireless communication system.

The present disclosure can provide a device and method for scheduling channels having different bandwidths in different slots in a wireless communication system.

The present disclosure can provide a device and method for signaling information about a gap between a physical downlink control channel (PDCCH) and a physical downlink/uplink shared channel (PxSCH) in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

## Technical Solution

As an example of the present disclosure, a method of operating a terminal in a wireless communication system may comprise receiving configuration information including information indicating an offset between a physical downlink control channel (PDCCH) and a physical downlink shared channel (PDSCH), configuring a result of adding a value indicated by the configuration information and a predefined value as an offset based on the configuration information indicating an 0-offset, receiving control information through the PDCCH, identifying a slot and resource to which the PDSCH is mapped based on the control information and the offset, and receiving the PDSCH in the identified slot and resource.

As an example of the present disclosure, a terminal in a wireless communication system may comprise a transceiver and a processor connected to the transceiver. The processor may receive configuration information including information indicating an offset between a physical downlink control channel (PDCCH) and a physical downlink shared channel (PDSCH), configure a result of adding a value indicated by the configuration information and a predefined value as an offset based on the configuration information indicating an 0-offset, receive control information through the PDCCH, identify a slot and resource to which the PDSCH is mapped based on the control information and the offset and receive the PDSCH in the identified slot and resource.

As an example of the present disclosure, a communication device may comprise at least one processor and at least one computer memory connected to the at least one processor and configured to store instructions that direct operations as executed by the at least one processor. The operations may comprise receiving configuration information including information indicating an offset between a physical downlink control channel (PDCCH) and a physical downlink shared channel (PDSCH), configuring a result of adding a value indicated by the configuration information and a predefined value as an offset based on the configuration information indicating an 0-offset, receiving control information through the PDCCH, identifying a slot and resource to which the PDSCH is mapped based on the control information and the offset, and receiving the PDSCH in the identified slot and resource.

As an example of the present disclosure, a non-transitory computer-readable medium storing at least one instruction may comprise the at least one instructions executable by a processor. The at least one instruction may control a device to receive configuration information including information indicating an offset between a physical downlink control channel (PDCCH) and a physical downlink shared channel (PDSCH), configure a result of adding a value indicated by the configuration information and a predefined value as an offset based on the configuration information indicating an 0-offset, receive control information through the PDCCH, identify a slot and resource to which the PDSCH is mapped based on the control information and the offset and receive the PDSCH in the identified slot and resource.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, hardware costs can be reduced by saving buffers.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates the concept of cross-slot scheduling in a wireless communication system according to an embodiment of the present disclosure.

FIG. 9 illustrates an example of a method of indicating slot offset information in a wireless communication system according to an embodiment of the present disclosure.

FIG. 10 illustrates an example of a procedure for receiving data in a wireless communication system according to an embodiment of the present disclosure.

**Mode for Invention**

The embodiments of the present disclosure described below are combinations of elements and features of the present disclosure in specific forms. The elements or features may be considered selective unless otherwise mentioned.

Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

**Overall System**

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

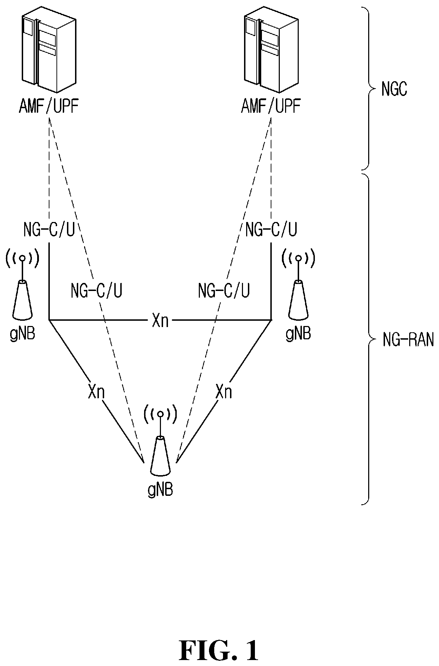

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

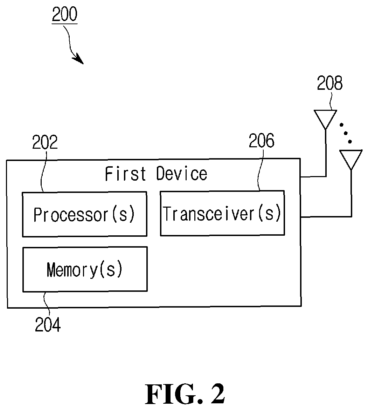

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be anAI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

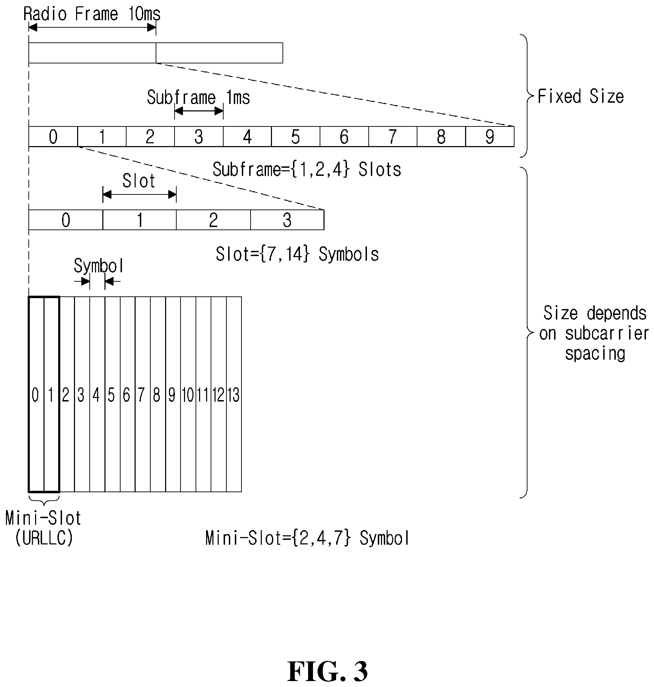

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15\,[kHz]$ | CP |
|---|---|---|
| 0 | 15 | Normal |
| 1 | 30 | Normal |
| 2 | 60 | Normal, Extended |
| 3 | 120 | Normal |

(continued)

| μ | Δf=2$^μ$ · 15[*kHz*] | CP |
|---|---|---|
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a denseurban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA}+N_{TA,offset})T_c$ than a corresponding downlink frame in a corresponding terminal starts. For a subcarrier spacing configuration μ, slots are numbered in an increasing order of $n^{\mu}_{s} \in \{0,\cdots,N^{subframe,\mu}_{slot}-1\}$ in a subframe and are numbered in an increasing order of $n^{\mu}_{s,f} \in \{0,\cdots,N^{frame,\mu}_{slot}-1\}$ in a radio frame. One slot is configured with $N^{slot}_{symb}$ consecutive OFDM symbols and $N^{slot}_{symb}$ is determined according to CP. A start of a slot $n^{\mu}_{s}$ in a subframe is temporally arranged with a start of an OFDM symbol $n^{\mu}_{s}N^{slot}_{symb}$ in the same subframe. All terminals may not perform transmission and reception at the same time, which means that not all OFDM symbols of a downlink slot or an uplink slot are available.

Table 3 represents the number of OFDM symbols per slot ( $N^{slot}_{symb}$ ), the number of slots per radio frame ( $N^{frame,\mu}_{slot}$ ) and the number of slots per subframe ( $N^{subframe,\mu}_{slot}$ ) in a normal CP and Table 4 represents the number of OFDM symbols per slot, the number of slots per radio frame and the number of slots per subframe in an extended CP.

[Table 3]

| μ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on μ=2 (SCS is 60 kHz), and referring to Table 3, 1 subframe may include 4 slots. 1 subframe={ 1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

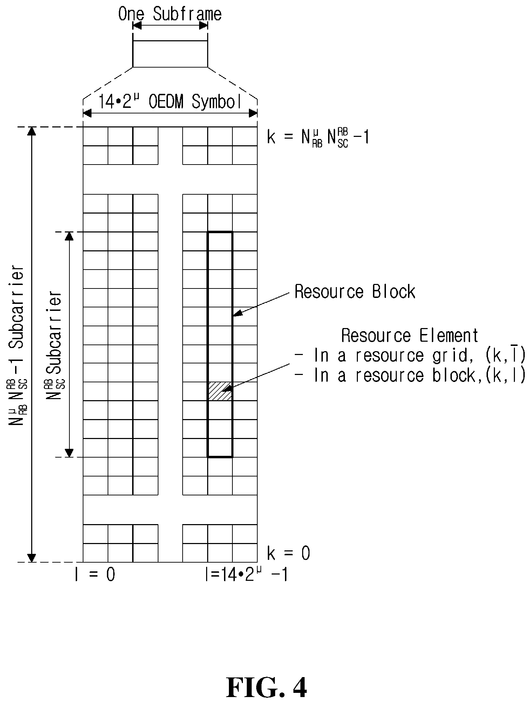

FIG. 4 exemplifies a resource grid in a wireless communication system to which the present disclosure may be applied.

Referring to FIG. 4, as an illustrative description, a resource grid is configured with $N_{RB}^{\mu}N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k, l'). Here, $k=0, \ldots, N_{RB}^{\mu}N_{SC}^{RB}-1$ is an index in a frequency domain and $l'=0, \ldots, 2^{\mu}N_{symb}^{(\mu)}-1$ refers to a position of a symbol in a subframe. When referring to a resource element in a slot, an index pair (k, l) is used. Here, $l=0, \ldots, 2^{\mu}N_{symb}^{(\mu)}-1$. A resource element (k, l') for μ and an antenna port p corresponds to a complex value, $a_{k,f}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration μ. The center of subcarrier 0 of common resource block 0 for a subcarrier spacing configuration μ is identical

to "point A'. A relationship between a common resource block number $n^{\mu}_{CRB}$ and a resource element (k, 1) for a subcarrier spacing configuration µ in a frequency domain is given as in the following Equation 1.

[Equation 1]

$$n^{\mu}_{CRB} = \left\lfloor \frac{k}{N^{RB}_{sc}} \right\rfloor$$

In Equation 1, k is defined relatively to point A so that k=0 corresponds to a subcarrier centering around point A. Physical resource blocks are numbered from 0 to $N^{size,\mu}_{BWP,i} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n^{\mu}_{CRB} = n^{\mu}_{PRB} + N^{start,\mu}_{BWP,i}$$

$N^{start,\mu}_{BWP,i}$ is a common resource block that a BWP starts relatively to common resource block 0.

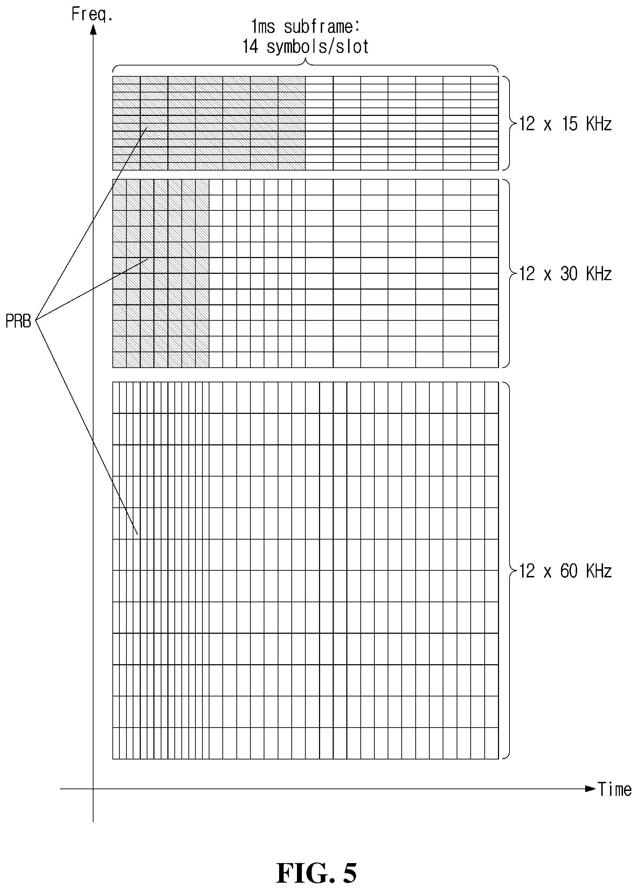

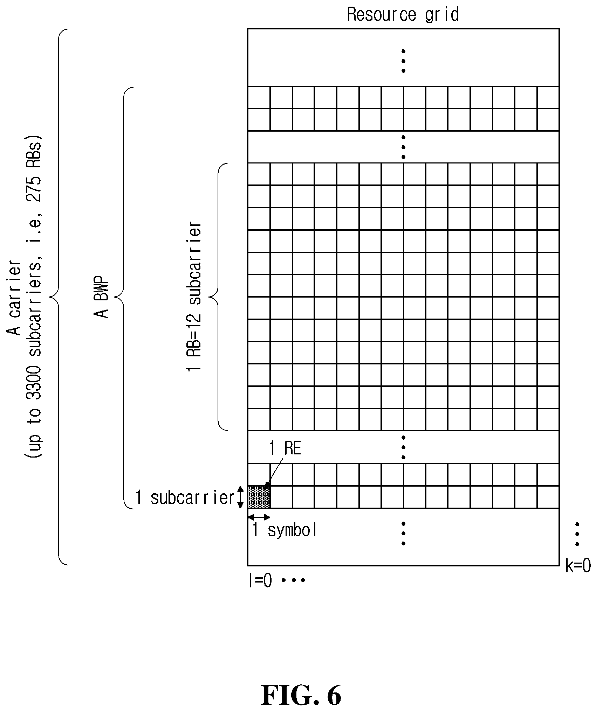

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

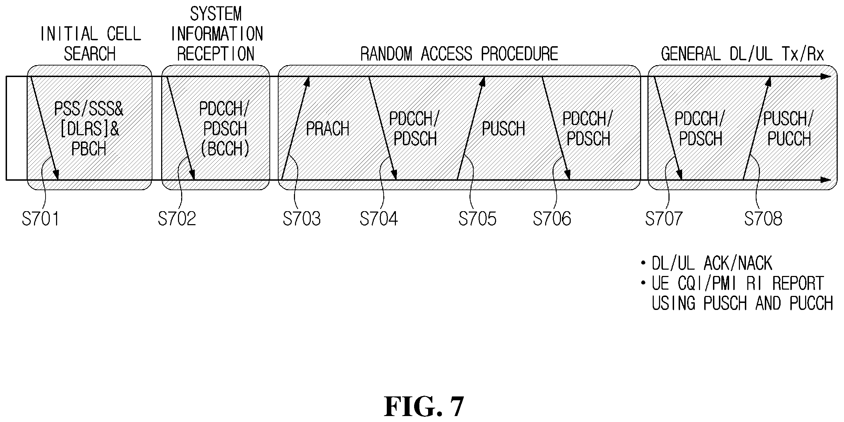

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Specific embodiment of the present disclosure

The present disclosure relates to scheduling for data, and describes a technique for performing cross-slot scheduling. Specifically, the present disclosure presents various embodiments for reducing the usage of buffers and memory in a situation where a narrow bandwidth is used for a data channel.

5G NR is a technology that mainly provides services through three main technologies: eMBB (Enhanced Mobile Broadband), URLLC, and mIoT (Massive IoT: Internet of Things). In the case of mIoT, rather than a technology direction that requires high-performance maximum throughput (max T-put) speed transmission such as CA (carrier aggregation), it can be thought of as a terminal device form that optimizes power consumption based on small size and low power. Then, not only the three main technologies of URLLC, eMBB, and mIoT exist in 5G NR, but a hybrid form of the three technologies is also possible. In 3GPP Release-17, by targeting to some extent smart factory applications or wearable devices, a new device type that requires low power while requiring URLLC or a certain level of speed may be needed. This type of device is referred to as a reduced capability terminal, i.e., a Redcap (reduced capability) UE or a Redcap terminal. The present disclosure introduces a technique for simply saving costs by using less buffering and memory for a device having the Redcap device type introduced in Release 17. The HW (hardware) platform of the device according to the proposed technology is not much different from the Release 17 Redcap device type. If the HW platform is developed from a low cost perspective, rather than aiming to reduce the simple parts BOM (bill of metal), it will be possible to increase utilization in the wearable or smart factory fields, which are target markets for 10 to 20 MHz services, by aiming to additionally reduce the maximum throughput (T-put) or the materials of the buffering part with less change. That is, the commercialization of the technology will be much shorter than the release 17 Redcap in terms of the schedule, even if there is no significant improvement in cost reduction, it will be able to sufficiently respond to other market needs.

The present disclosure considers a situation in which an operation is performed in a narrow bandwidth. Furthermore, in an initial access phase or connected mode in which a terminal initially attempts to access a base station, a situation in which a 5 MHz BW (bandwidth) and a contiguous band size are maintained in only a PxSCH, and a maximum 20 MHz BW is maintained in other existing channels (e.g., PDCCH, PUCCH, SRS, PRACH, etc.) may be considered from a BWP perspective. In this case, from a HW platform perspective, it is expected that there will be no significant change in a baseband circuit or an RFIC (radio frequency integrated circuit). Since the maximum throughput is reduced, a reduction in the memory size, etc. may be considered. Furthermore, while other channels may range up to 20 MHz, PxSCH may range only up to 5 MHz. Therefore, if PxSCH and PDCCH are scheduled in the same slot, buffer savings may not be possible. However, after decoding the DCI of the PDCCH, if it is confirmed through the TRDA field that transmission will be performed in the next or subsequent slot, buffering for transmission of the PDSCH may be performed in the range of 5 MHz. Therefore, if the PDCCH and PxSCH are transmitted in different slots, the terminal may operate the memory without wasting the buffer. That is, if a gap of at least one slot may be provided between a PDCCH and a PDSCH corresponding thereto through cross slot scheduling, and if the transmission of a PDSCH in another slot may be known in advance through the TDRA field of the PDCCH, the buffer size of the shared channel may be designed to be reduced in advance in the eRedcap (enhanced Redcap) terminal of Release 18, and thus a cost reduction effect may be expected.

According to various embodiments of the present disclosure, since the PxSCH is transmitted within a maximum of 5 MHz, but the reception of other channels is possible within a maximum of 20 MHz, when the channel of the PxSCH and the other channel are received and/or transmitted in one slot, buffering reduction is not easy. This is because the buffer memory size of the PxSCH must be designed with a maximum 20 MHz BW. In order to save the buffer, it is preferable that the slot including the PDCCH and the slot including the PxSCH accordingly are arranged with a difference of 1 to 2 slots. Buffering may be set on a slot-by-slot basis, because when two channels are received in one slot, information about the PDSCH cannot be known before decoding the PDCCH. Therefore, the present disclosure proposes a technique for preventing same-slot scheduling by spacing out the scheduling of the PDCCH and the PxSCH in Release 18 redcap by using cross-slot scheduling.

Release 16 defines a power saving technique. With respect to the power saving technique, the concept of cross carrier scheduling was introduced for the first time. In Release 16, cross carrier scheduling aims at power saving in addition to buffer saving, and may be used in combination with the proposed technique of the present disclosure from the perspective of ensuring a gap in scheduling of PDCCH and PDSCH. Furthermore, the present disclosure examines problems that may occur when combining cross carrier scheduling, and introduces methods that can solve the problems.

The cross-slot scheduling technique related to power saving in Release 16 is as follows.

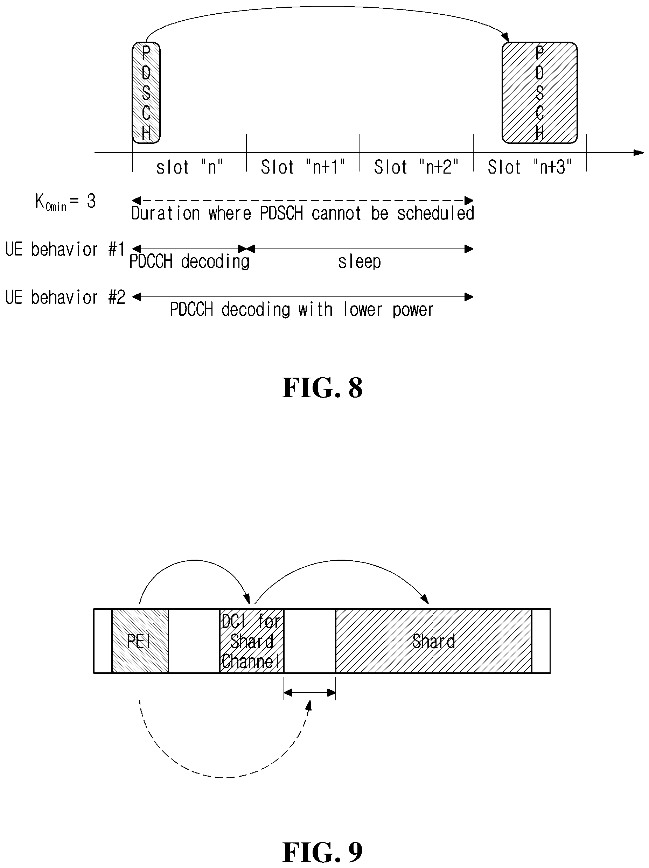

FIG. 8 illustrates the concept of cross-slot scheduling in a wireless communication system according to an embodiment of the present disclosure. Referring to FIG. 8, a constant gap between a PDCCH and a PDSCH scheduled by the PDCCH may be guaranteed through the cross-slot scheduling technique. Two slots among slots 0 to 16 may be configured in RRC, and one of the two configured slots may be designated as a DCI. That is, in FIG. 8, the terminal may perform no operation during the sleep period or decode the PDCCH slowly (e.g., over multiple slots). That is, even if the PDCCH is received through a bandwidth greater than 5 MHz, the terminal may divide the FFT output data of the PDCCH into a 5 MHz buffer and store and process it. In this case, decoding of the PDCCH may be completed after multiple slots have elapsed.

For this, it is assumed that the K0 value is always greater than a certain minimum value, and the minimum value may be defined through an RRC parameter called minimumSchedulingOffset. If the same-slot scheduling is possible for PDCCH and PxSCH, even if the transmission and reception of PxSCH do not exceed 5 MHz bandwidth size, the terminal has no choice but to always assign a maximum of 20 MHz as a buffer size in the corresponding slot, rather than from the viewpoint of power saving. However, if cross-slot scheduling is performed as shown in FIG. 8, the terminal may prepare buffering of 5 MHz bandwidth size for transmission or reception of PxSCH without having to consider transmission of PxSCH of 5 MHz or more.

Referring to FIG. 8, a PDCCH is transmitted in slot n, and a PDSCH is transmitted in slot n+3. Accordingly, the UE may decode the PDCCH in slot n, enter a sleep state in slot n+1 and slot n+2, or decode the PDCCH at low power in slots n to n+2.

- Minimum scheduling offset restriction: When the minimum scheduling offset restriction is applied, the UE is not expected to be scheduled with a DCI in slot n to receive a PDSCH or PUSCH with K0 or K2 smaller than the minimum scheduling offset restriction $K_{0min}$ or $K_{2min}$.
- Power saving using minimum scheduling offset restriction

  - When $K_{0min}$ is configured by the gNB, the UE may reduce power consumption as follows:
  - UE behavior #1) Fast PDCCH decoding and sleep during the guaranteed gap, or
  - UE behavior #2) Relaxed PDCCH decoding (e.g., lower voltage, lower clock rate).

minimumSchedulingOffset indicates the minimum gap of slots that PDSCH and PUSCH have respectively for K0 and K2 based on PDCCH. Since the indicated gap is a minimum value, the actual slot of K0 or K2 of TDRA will be equal to or larger than that. In addition, when specified by DCI, the following rule may be applied. As can be seen in the following, the power saving applied in Release 16 may be applied only in the connected mode of USS. However, the proposed technology of the present disclosure may be applied in RRC idle or initial access or RRC inactive mode in addition to the connected mode of USS.

Embodiment #1: In the cross-slot scheduling in eRedCap of Release 18, if it is USS, the power-saving related minimumSchedulingOffset parameter of Release 16 is reused to apply it appropriately.

The minimum applicable scheduling offset indicator included in DCI format 0_1/0_1 is 0 bit if the higher layer parameter minimumSchedulingOffset is not configured, and 1 bit if the higher layer parameter minimumSchedulingOffset is configured. At this time, the minimum applicable K0 and K2 according to the value of the minimum applicable scheduling offset indicator are set as shown in [Table 5] below.

[Table 5]

| Bit filed mapped to index | Minimum applicable K0 for the active DL BWP, if minimumSchedulingOffset is configured for the DL BWP | Minimum applicable K2 for the active UL BWP, if minimumSchedulingOffset is configured for the UL BWP |
|---|---|---|
| 0 | The first value configured by minimumSchedulingOffset for the active DL BWP | The first value configured by minimumSchedulingOffset for the active UL BWP |
| 1 | The second value configured by minimumSchedulingOffset for the active DL BWP if the second value is configured; 0 otherwise | The second value configured by minimumSchedulingOffset for the active UL BWP if the second value is configured; 0 otherwise |

Referring to [Table 5], a 0 offset may exist. In some cases, such as when it is not configured in RRC, a 0 offset may be applied. Even if this part reuses the corresponding parameter, it may not be suitable for the cross-slot scheduling of eRedcap of the current release. Therefore, the present disclosure proposes the following embodiments.

- Embodiment #1-1: If the offset is 0, cross-slot scheduling is applied by configuring it to 1.
- Embodiment #1-2: If cross-carrier scheduling of eRedcap is applied at the offset determined according to [Table 5], 1 is additionally added.

    ▪ Instead of 1, another value may be added, and the added value may be signaled in advance from the higher level. Here, higher signaling means RRC signaling.

- Embodiment #1-3: As a predefined frequency domain, it may be assumed that a designated region of up to 5MHz is used. In this case, same-slot scheduling is also possible.
- Embodiment #1-4: When configured with DCI rather than RRC, if the offset is 0 or 1, Embodiment #1-3 is applied.

Embodiment #2: New offset parameter or field is newly defined and the value is indicated by RRC or DCI.

- Embodiment #2-1: In RRC, a fixed value or part of a table is indicated by DCI by using an index.
- The offsets of uplink and downlink may be different.

Embodiment #3: If a terminal supporting the cross-slot scheduling of power saving of Release 16 also needs to support the cross-slot scheduling of eRedcap of Release 18, both slot offset related parameters of the two cases are signaled in DCI or from the higher layer.

- Embodiment #3-1: The larger value among the two values is applied. Alternatively, only the slot offset parameter related to cross-slot scheduling is applied.
- Embodiment #3-2: The minimumSchedulingOffset of power saving of Release 16 is applied first. However, if the value of minimumSchedulingOffset is 0, the offset value of eRedcap is applied.
- Embodiment #3-3: The sum of two parameters is applied. In case of K0 or K2, the guarantee for the sum value or more shall be supported in the TDRA allocation table list information in the RRC message.

Embodiment #4: If dynamic positioning is not performed, the maximum 5 MHz bandwidth size or BW area of the pre-configured PxSCH is used.

In a PRACH procedure or an initial access procedure, a situation may occur where a list index of a specific offset cannot be pre-configured with a specific RRC. In this case, configuring a value in SIB or defining the location of the PxSCH in the initial BWP may be considered.

- Example #4-1: Offsets on specific PDCCH and PDSCH before initial access are signaled using SIB. At this time, restrictions may be imposed on the applied PDSCH, such as the use of only specific RNTI. (Example: C-RNTI or MCS-C-RNTI)

   ▪ The slot offset value may be configured differently for each RNTI, and for a specific RNTI, predefined values may be used to increase operational simplicity.

Embodiment #4-2: In the PRACH or initial access process, the location of the RB may be designated in advance. That is, the location where the PDSCH may be placed is determined in advance within a range of up to 5 MHz before decoding the PDCCH, so in this case, same-slot scheduling is also possible to a certain extent.

   ▪ In this case, the location and size may be indicated in advance by SIB, etc.
   ▪ 5 MHz (or a pre-specified size less than 5 MHz BW) may be configured from the lower index PRB, or 5 MHz (or a pre-specified size less than 5 MHz BW) may be configured from the higher index PRB.

Embodiment #5: Restriction is imposed on the K0 value or K2 value of the RRC parameter in the table list of TDRA.

The method of guaranteeing the minimum gap between PDCCH and PxSCH through minimumScheduling offset has the advantage of being able to configure the slot offset dynamically. However, if only static buffer size reduction is considered, a method of imposing a restriction on K0 and K2 from the beginning in RRC signaling may be used. If the default TDRA table defined in TS 38.213 is not used, it is possible to set up to 16 lists of TDRAs from the higher level and indicate them in DCI. At this time, if the following RRC parameter information is referred to in the TDRA table, K0 or K2 may be configured from a minimum of 0, but a restriction may be imposed on the range of the configuration value of K0 or K2. This embodiment may be applied only to reduce the buffer memory size of an eRedcap terminal.

- Embodiment #5-1: For the list range of K0 and K2, a restriction may be set or defined to have a specific value or more. For example, K0 and K2 may only have values greater than 1 or 2 for eRedcap.
- Embodiment #5-2: By adding a new Redcap list parameter for Release 18 for K0 and K2, it may be indicated to use the corresponding list for eRedcap. In this case, the corresponding list may be defined such that the range of values starts from 0.
- Embodiment #5-3: As shown in [Table 6] below, offsets (e.g., K0_offst, K2_offset) are defined in the IE (information element), and the result of adding the corresponding value to the existing K0 or K2 may be used as K0 or K2. If the corresponding value is not signaled, the corresponding value may be recognized as a default value (e.g., 0).

[Table 6]

| *PDSCH-TimeDomainResourceAllocationList* information element |
|---|
| -- ASN1START |
| -- TAG-PDSCH-TIMEDOMAINRESOURCEALLOCATIONLIST-START |
| PDSCH-TimeDomainResourceAllocationList ::=    SEQUENCE  (SIZE(1..maxNrofDL-Allocations))  OF  PDSCH-TimeDomainResourceAllocation |
| PDSCH-TimeDomainResourceAllocation ::=          SEQUENCE { |
|     k0                                INTEGER(0..32)         OPTIONAL,     -- Need S |
|     K0_offset |
|     mappingType                       ENUMERATED {typeA, typeB}, |
|     startSymbolAndLength              INTEGER (0..127) |
| } |
| -- TAG-PDSCH-TIMEDOMAINRESOURCEALLOCATIONLIST-STOP |
| -- ASN1STOP |
| *PUSCH-TimeDomainResourceAllocation* information element |
| -- ASN1START |
| -- TAG-PUSCH-TIMEDOMAINRESOURCEALLOCATIONLIST-START |
| PUSCH-TimeDomainResourceAllocationList ::=          SEQUENCE      (SIZE(1..maxNrofUL-Allocations))      OF PUSCH-TimeDomainResourceAllocation |
| PUSCH-TimeDomainResourceAllocation ::=          SEQUENCE { |
|     k2                                INTEGER(0..32)         OPTIONAL,     -- Need S |
|     K2_offset |
|     mappingType                       ENUMERATED {typeA, typeB}, |
|     startSymbolAndLength              INTEGER (0..127) |
| } |
| -- TAG-PUSCH-TIMEDOMAINRESOURCEALLOCATIONLIST-STOP |
| -- ASN1STOP |

Embodiment #6: Other various proposals

- Embodiment #6-1: Whether cross-slot scheduling is possible in eRedcap may be signaled through UE capability report.

  ▪ Accordingly, the base station may determine how to schedule the corresponding terminal.

- Embodiment #6-2: As an early indication, the terminal may signal in advance a request for support for cross-slot scheduling using Message 1 (e.g., RACH preamble) or Message 3 in the RACH procedure.
- Embodiment #6-3: Using PDSCH of Message 2, the base station may pre-configure the PDSCH location of 5-MHz region in the frequency domain as SIB for Release 18 eRedcap.
- Embodiment #6-4: In the case of a terminal supporting PEI (paging early indication), slot offset information between PDCCH and PxSCH may be indicated in advance through PEI. FIG. 9 illustrates an example of a method of indicating slot offset information in a wireless communication system according to an embodiment of the present disclosure.
- Embodiment #6-5: In case of cross-slot scheduling, the slot offset of PDCCH and PDSCH may be indicated using MAC CE.
- Embodiment #6-6: In case of needing to distinguish between paging of eRedcap terminal of Release 18 and legacy terminal, whether it is a 5-MHz Redcap terminal may be indicated using one bit in DCI indicating paging. Through this, in case of eRedcap PxSCH within 5 MHz, predefined frequency resources (e.g., resources less than 5 MHz BW) may be allocated.

- Embodiment #6-7: When applying default time domain allocation of PDSCH, the K0 values are 0 in all tables, but other values may be used.

  ▪ A new table other than the K0 value may be applied.
  ▪ A value that is the sum of a specific value and the K0 value defined in the existing table may be used. For example, the specific value may be 1 or 2, etc., and may be predefined.

- Embodiment #6-8: When applying the default time domain allocation of PUSCH to the eRedcap terminal, the following embodiments may be applied.

  ▪ A new table other than the K2 value may be applied.
  ▪ A value that is the sum of a specific value and the K2 value defined in the existing table may be used. For example, the specific value may be 1 or 2, etc., and may be predefined or configured in RRC.

- Embodiment #6-9: Information about cross-slot scheduling related preference of the UE may be added to UE AssistanceInformation information.
  ▪ UE AssistanceInformation information is an IE for reporting to the base station the preference that the UE may support based on its capability in the current situation, but wants to be scheduled for various situations. That is, in this respect, UE AssistanceInformation information is different from UE CapabilityInformation. Although minSchdulingOffsetPreference is defined in relation to power saving in Release 16, it may be reused for the purpose of indicating the preference of PxSCH cross-slot scheduling of Redcap. Therefore, it would be possible to extend the definition of the parameter in [Table 7] so that it may be used for the purpose of reducing the buffer size of PxSCH.

[Table 7]

| UEAssistanceInformation field descriptions |
| --- |
| affectedCarrierFreqList<br>Indicates a list of NR carrier frequencies that are affected by IDC problem. |
| affectedCarrierFreqCombList<br>Indicates a list of NR carrier frequencie combinations that are affected by IDC problems due to Inter-Modulation Distortion and harmonics from NR when configured with UL CA. |
| delayBudgetReport<br>Indicates the UE-preferred adjustment to connected mode DRX. |
| minSchedulingOffsetPreference<br>Indicates the UE's preferences on minimumSchedulingOffset of cross-slot scheduling for power saving. |
| preferredDRX-InactivityTimer<br>Indicates the UE's preferred DRX inactivity timer length for power saving. Value in ms (milliSecond). ms0 corresponds to 0, msl corresponds to 1 ms, ms2 corresponds to 2 ms, and so on. If the field is absent from the DRX-Preference IE, it is interpreted as the UE having no preference for the DRX inactivity timer. If secondary DRX group is configured, the preferredDRX-InactivityTimer only applies to the default DRX group. |
| preferredDRX-LongCycle<br>Indicates the UE's preferred long DRX cycle length for power saving. Value in ms. ms10 corresponds to 10ms, ms20 corresponds to 20 ms, ms32 corresponds to 32 ms, and so on. If preferredDRX-ShortCycle is provided, the value of preferredDRX-LongCycle shall be a multiple of the preferredDRX-ShortCycle value. If the field is absent from the DRX-Preference IE, it is interpreted as the UE having no preference for the long DRX cycle. |
| preferredDRX-ShortCycle<br>Indicates the UE's preferred short DRX cycle length for power saving. Value in ms. ms2 corresponds to 2ms, ms3 corresponds to 3 ms, ms4 corresponds to 4 ms, and so on. If the field is absent from the DRX-Preference IE, it is interpreted as the UE having no preference for the short DRX cycle. |
| preferredDRX-ShortCycleTimer |

(continued)

| UEAssistanceInformation field descriptions |
| --- |
| Indicates the UE's preferred short DRX cycle timer for power saving. Value in multiples of preferredDRX-Short-Cycle. A value of 1 corresponds to preferredDRX-ShortCycle, a value of 2 corresponds to 2 * preferredDRX-Short-Cycle and so on. If the field is absent from the DRX-Preference IE, it is interpreted as the UE having no preference for the short DRX cycle timer. A preference for the short DRX cycle is indicated when a preference for the short DRX cycle timer is indicated. |
| preferredK0<br><br>Indicates the UE's preferred value of k0 (slot offset between DCI and its scheduled PDSCH - see TS 38.214 [19], clause 5.1.2.1) for cross-slot scheduling for power saving. Value is defined for each subcarrier spacing (numerology) in units of slots. sl1 corresponds to 1 slot, sl2 corresponds to 2 slots, sl4 corresponds to 4 slots, and so on. If a value for a subcarrier spacing is absent, it is interpreted as the UE having no preference on k0 for cross-slot scheduling for that subcarrier spacing. If the field is absent from the MinSchedulingOffsetPreference IE, it is interpreted as the UE having no preference on k0 for cross-slot scheduling. |
| preferredK2<br><br>Indicates the UE's preferred value of k2 (slot offset between DCI and its scheduled PUSCH - see TS 38.214 [19], clause 6.1.2.1) for cross-slot scheduling for power saving. Value is defined for each subcarrier spacing (numerology) in units of slots. sl1 corresponds to 1 slot, sl2 corresponds to 2 slots, sl4 corresponds to 4 slots, and so on. If a value for a subcarrier spacing is absent, it is interpreted as the UE having no preference on k2 for cross-slot scheduling for that subcarrier spacing. If the field is absent from the MinSchedulingOffsetPreference IE, it is interpreted as the UE having no preference on k2 for cross-slot scheduling. |
| preferredRRC-State<br><br>Indicates the UE's preferred RRC state. The value idle is indicated if the UE prefers to be released from RRC_CONNECTED and transition to RRC_IDLE. The value inactive is indicated if the UE prefers to be released from RRC_CONNECTED and transition to RRC_INACTIVE. The value connected is indicated if the UE prefers to revert an earlier indication to leave RRC_CONNECTED state. The value outOfConnected is indicated if the UE prefers to be released from RRC_CONNECTED and has no preferred RRC state to transition to. The value connected can only be indicated if the UE is configured with connectedReporting. |

■ Alternatively, a new preference for cross-slot scheduling may be specified via a new parameter. In this case, instead of simple information about preference, it is also possible to report the actual values of one or more of the offsets that one prefers.

- Embodiment #6-10: When the BW size of PxSCH of a specific RNTI exceeds 5 MHz, same-slot scheduling may be performed in a slot in which CORESET#x scheduling PDCCH is transmitted.

■ In this case, the limit of up to 5 MHz is not necessary in that slot from the perspective of saving buffers.

• When the PxSCH BW size is less than or equal to 5 MHz, same-slot scheduling or cross-slot scheduling may be applied as described above. Application of slot offset, signaling of slot offset may be performed regardless of the BW size.

• When the PxSCH BW size is less than or equal to 5 MHz, the slot offset parameter may not be applied even if the slot offset parameter related to cross-slot scheduling is indicated in advance.

- Embodiment #6-11: When BWP is less than or equal to 5 MHz, there is no benefit of cross-slot scheduling, and thus cross-slot scheduling may be used only when BWP is greater than or equal to 5 MHz.

- Embodiment #6-12: When configuring a slot offset for application of cross-slot scheduling from the upper level, the slot offset value may be specified for each BWP. If a sub-BWP or PxSCH-BWP for BWP of a shared channel is defined, the slot offset value may be indicated for each sub-BWP or PxSCH-BWP.

- Embodiment #6-13: Cross-slot scheduling in eRedcap means all cases where PDCCH and PxSCH are not included in the same slot. That is, in a situation where K0 and K2 are 1 or greater, a case may occur where it is in the same slot as a PDCCH that performs scheduling later, rather than a PDCCH that schedules a PxSCH. In this case, in order to save buffer, a bandwidth size of 5 MHz or less may be excluded for PxSCH transmission.

■ At this time, in a slot including CORESET#X mapped by SSS (search space set) and SSSG (search space set group) of PDCCH, TDRA of PxSCH may be configured in DCI so that PxSCH is not scheduled.

▪ If a slot occurs in which PDCCH and PxSCH of CORESET#X are monitored or transmitted simultaneously, the terminal may not attempt decoding of the PxSCH in the slot. Alternatively, the terminal may not attempt decoding of the PDCCH.

• Whether to attempt decoding of PDCCH or PxSCH may be configured or predefined in a higher layer.
• Whether to attempt decoding of PDCCH or PxSCH for each RNTI may be indicated or predefined in a higher layer.

Embodiment #7: Static resource pre-configuration method of same-slot scheduling

In order to limit the post-FFT buffer size to 5 MHz, the terminal shall decode the FDRA of the PxSCH, but the decoding operation may require more than 1 slot. Therefore, in the case of the above-described cross-slot scheduling, after the PDCCH is transmitted in the CORESET, the PxSCH corresponding to the PDCCH is not scheduled in the corresponding slot, which may cause performance delay. Therefore, the cross-slot scheduling may be utilized as a method of reducing the post-FFT buffer size for services that are not critical to delay. However, in the case of a service that requires very small delay, if a situation arises where the post-FFT buffer size shall be changed in OFDM symbol units in the same slot, it is necessary to pre-configure from which region the frequency domain of the PDSCH starts after a specific OFDM symbol. Therefore, the present disclosure describes several proposals that may make this possible as follows.

- Embodiment #7-1: The starting OFDM symbol from which PxSCH may be transmitted may be pre-configured after CORESET (designation of search space set). Through this, the terminal may know in advance and prepare from which OFDM symbol PxSCH may be transmitted in the corresponding slot.

    ▪ If there is no CORESET for PDCCH scheduling in the slot, the configuration of the OFDM start symbol of PxSCH may not be applied.
    ▪ When configuring the TDRA of PxSCH, the starting symbol S shall be set to a location after the symbols occupied by a specific CORESET. For example, if the CORESET occupies the first to third OFDM symbols in the slot, the PDSCH shall be indicated in the higher layer to be transmitted after the third or fourth symbol.
    ▪ It may be controlled so that the PxSCH is not located in the OFDM symbol location of the CORESET where the PDCCH is configured. The PxSCH may be located only in the OFDM symbols before and after the location where the CORESET is located within the slot.

- Embodiment #7-2: For unicast PxSCH, FDRA may be interpreted differently so that resources are allocated from the PRB of CORESET rather than the starting PRB of BWP. In addition, OFDM symbols of PxSCH in the slot may be configured so as not to overlap with OFDM symbols of CORESET and, additionally, OFDM symbols of SSB.

    ▪ If there is no CORESET for scheduling PDCCH in the slot, the starting PRB of PxSCH may be the same as the starting PRB of BWP.

        ♦ The BW of PxSCH is limited to a maximum of 5 MHz from the starting PRB. In this case, if the sum of consecutive RBs is within a maximum of 5 MHz or the total sum of allocated RBs is within 5 MHz even if they are discontinuous, the allocation is allowed.

- Embodiment #7-3: Instead of receiving PDSCH for unicast, the RB index may be determined as follows.

    ▪ The RB index may be determined based on the CORESET including the PDCCH that schedules the unicast PDSCH.

        ♦ RB indices may be determined in a range of up to 5 MHz in the direction of increasing RB indices from the lowest RB index of the CORESET.

        ♦ RB indices may be determined in a range of up to 5 MHz in the direction of decreasing RB indices from the highest RB index of the CORESET.

        ♦ The direction of the aforementioned indices may be configured by a specific parameter in the higher layer. If the parameter is omitted, it may be recognized as a predefined direction (e.g., increasing direction).

    ▪ The 5 MHz area to be buffered may be indicated through dedicated RRC signaling.

♦ 5 MHz area may be indicated in FDRA format, or offset may be pre-configured in higher layer. The configured offset may be interpreted as the starting PRB of the FDRA.

♦ For the interpretation criterion PRB of FDRA, detailed options may be indicated in the CORESET/active DL BWP criterion method. If the indicated parameter is omitted, the active DL BWP may be considered.

♦ PxSCH may be aligned based on the center frequency of the active BWP.

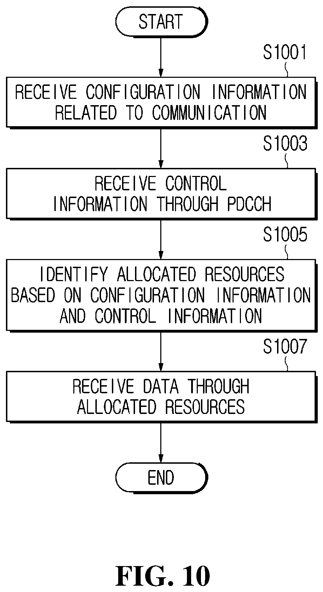

FIG. 10 illustrates an example of a procedure for receiving data in a wireless communication system according to an embodiment of the present disclosure. FIG. 10 illustrates an operation method of a terminal.

Referring to FIG. 18, in step S1001, a terminal receives configuration information related to communication. For example, the configuration information may include information related to an offset between a PDCCH and a PDSCH. Alternatively, the configuration information may include information related to the offset between the PDCCH and the PUSCH.

In step S1003, the terminal receives control information through the PDCCH. The control information includes DCI, and the DCI may include scheduling information for the PDSCH or PUSCH. Here, the scheduling information includes information on allocated frequency resources. At this time, the frequency resources may be allocated with a bandwidth of 5 MHz or less.

In step S1005, the terminal identifies the allocated resources based on the configuration information and the control information. The terminal identifies the location of the resources allocated for the PDSCH or PUSCH by interpreting the DCI. At this time, the offset between PDSCH/PDSCH is determined based on the offset indicated by the terminal configuration information. Here, the determined offset may be determined based on the configuration information received in step S1001 as well as information received through additional other signaling.

In step S1007, the terminal receives data through the allocated resources. The terminal may process the data by buffering the signal received through the identified resources and performing necessary operations.

Since the narrow bandwidth is utilized to the maximum of 20 MHz in the existing Release 17 Redcap, cost saving and weight reduction have been made possible from the HW platform perspective compared to the existing terminals. The present disclosure presents technologies that may be applied to wearables or smart factory devices without much effort from the development or verification perspective by enabling cost saving and reduction of buffer size or memory without significant change from the existing HW platform perspective. The proposed technologies may be slightly improved methods than Release 17 for devices and services that require a certain degree of mobility, and it is expected that commercialization may proceed faster than technologies that require complex improvements when needed in the market.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to m Wave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   receiving configuration information including information indicating an offset between a physical downlink control channel (PDCCH) and a physical downlink shared channel (PDSCH);
   configuring a result of adding a value indicated by the configuration information and a predefined value as an offset based on the configuration information indicating an 0-offset;
   receiving control information through the PDCCH;
   identifying a slot and resource to which the PDSCH is mapped based on the control information and the offset; and
   receiving the PDSCH in the identified slot and resource.

2. The method of claim 1, wherein the predefined value is configured by radio resource control (RRC) layer signaling.

3. The method of claim 1, wherein the PDSCH is allocated in a bandwidth range of 5 MHz or less.

4. The method of claim 1, wherein the offset between the PDCCH and the PDSCH is configured differently from an offset between the PDCCH and a physical uplink shared channel (PUSCH).

5. The method of claim 1,

   wherein the configuration information includes a *DSCH- TimeDomainResourceAllocationList IE* (information element), and
   wherein the *DSCH- TimeDomainResourceAllocationList* IE includes K0, K0_offset, K2, K2_offset.

6. The method of claim 1, further comprising:
   transmitting a capability report message indicating that cross-slot scheduling is supported.

7. The method of claim 1, further comprising:
   transmitting MSG1 (message1) or MSG3 (message3) requesting cross-slot scheduling.

8. A terminal in a wireless communication system comprising:

   a transceiver; and
   a processor coupled to the transceiver,
   wherein the processor is configured to:

   receive configuration information including information indicating an offset between a physical downlink control channel (PDCCH) and a physical downlink shared channel (PDSCH);
   configure a result of adding a value indicated by the configuration information and a predefined value as an offset based on the configuration information indicating an 0-offset;
   receive control information through the PDCCH;
   identify a slot and resource to which the PDSCH is mapped based on the control information and the offset; and
   receive the PDSCH in the identified slot and resource.

9. A communication device comprising:

   at least one processor; and
   at least one computer memory coupled to the at least one processor and configured to store instructions that direct operations as executed by the at least one processor,
   wherein the operations comprise:

   receiving configuration information including information indicating an offset between a physical downlink control channel (PDCCH) and a physical downlink shared channel (PDSCH);
   configuring a result of adding a value indicated by the configuration information and a predefined value as an offset based on the configuration information indicating an 0-offset;
   receiving control information through the PDCCH;

identifying a slot and resource to which the PDSCH is mapped based on the control information and the offset; and

receiving the PDSCH in the identified slot and resource.

10. A non-transitory computer-readable medium storing at least one instruction, the non-transitory computer-readable medium comprising the at least one instructions executable by a processor,
wherein the at least one instruction controls a device to:

receive configuration information including information indicating an offset between a physical downlink control channel (PDCCH) and a physical downlink shared channel (PDSCH);
configure a result of adding a value indicated by the configuration information and a predefined value as an offset based on the configuration information indicating an 0-offset;
receive control information through the PDCCH;
identify a slot and resource to which the PDSCH is mapped based on the control information and the offset; and
receive the PDSCH in the identified slot and resource.

## FIG. 1

FIG. 2

Radio Frame 10ms

Subframe 1ms

Fixed Size

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbol

**FIG. 3**

FIG. 4

FIG. 5

Resource grid

**FIG. 6**

FIG. 7

PDSCH

PDSCH

| slot "n" | Slot "n+1" | Slot "n+2" | Slot "n+3" |

$K_{0min} = 3$

Duration where PDSCH cannot be scheduled

UE behavior #1    PDCCH decoding    sleep

UE behavior #2    PDCCH decoding with lower power

**FIG. 8**

PEI

DCI for Shard Channel

Shard

**FIG. 9**

```
                    ┌─────────────┐
                    │    START    │
                    └─────────────┘
                           │
                           │                    S1001
                           ▼
        ┌──────────────────────────────────────┐
        │ RECEIVE CONFIGURATION INFORMATION     │
        │     RELATED TO COMMUNICATION          │
        └──────────────────────────────────────┘
                           │
                           │                    S1003
                           ▼
        ┌──────────────────────────────────────┐
        │          RECEIVE CONTROL              │
        │     INFORMATION THROUGH PDCCH         │
        └──────────────────────────────────────┘
                           │
                           │                    S1005
                           ▼
        ┌──────────────────────────────────────┐
        │      IDENTIFY ALLOCATED RESOURCES     │
        │ BASED ON CONFIGURATION INFORMATION    │
        │        AND CONTROL INFORMATION        │
        └──────────────────────────────────────┘
                           │
                           │                    S1007
                           ▼
        ┌──────────────────────────────────────┐
        │        RECEIVE DATA THROUGH           │
        │         ALLOCATED RESOURCES           │
        └──────────────────────────────────────┘
                           │
                           │
                           ▼
                    ┌─────────────┐
                    │     END     │
                    └─────────────┘
```

# FIG. 10

## INTERNATIONAL SEARCH REPORT

| International application No. |
|---|
| **PCT/KR2023/014040** |

### A.    CLASSIFICATION OF SUBJECT MATTER

**H04W 72/23**(2023.01)i; **H04W 72/12**(2009.01)i; **H04W 72/04**(2009.01)i; **H04W 52/02**(2009.01)i; **H04W 8/24**(2009.01)i; **H04W 72/53**(2023.01)i; **H04W 74/00**(2009.01)i

According to International Patent Classification (IPC) or to both national classification and IPC

### B.    FIELDS SEARCHED

Minimum documentation searched (classification system followed by classification symbols)

H04W 72/23(2023.01); H04B 7/26(2006.01); H04J 11/00(2006.01); H04L 5/00(2006.01); H04W 68/00(2009.01); H04W 68/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH, PDSCH, 오프셋(offset), 0-offset, RRC, 5MHz, PUSCH, 교차-슬롯 스케줄링(cross-slot scheduling), capability report, MSG1, MSG3

### C.    DOCUMENTS CONSIDERED TO BE RELEVANT

| Category* | Citation of document, with indication, where appropriate, of the relevant passages | Relevant to claim No. |
|---|---|---|
| X | US 2021-0410122 A1 (ZTE CORPORATION) 30 December 2021 (2021-12-30)<br>See paragraphs [0026]-[0069]; and claim 15. | 1-2,4-5,8-10 |
| Y | | 3,6-7 |
| Y | WO 2015-083914 A1 (LG ELECTRONICS INC.) 11 June 2015 (2015-06-11)<br>See claim 3. | 3 |
| Y | WO 2022-139512 A1 (SAMSUNG ELECTRONICS CO., LTD.) 30 June 2022 (2022-06-30)<br>See paragraph [0066]; and claim 1. | 6-7 |
| A | EP 4021128 A1 (SAMSUNG ELECTRONICS CO., LTD.) 29 June 2022 (2022-06-29)<br>See paragraphs [0063]-[0162]; and claim 1. | 1-10 |
| A | US 2020-0236692 A1 (SAMSUNG ELECTRONICS CO., LTD.) 23 July 2020 (2020-07-23)<br>See paragraphs [0180]-[0202]; and claims 1-4. | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014040**

| Patent document cited in search report | | | Publication date (day/month/year) | Patent family member(s) | | | Publication date (day/month/year) |
|---|---|---|---|---|---|---|---|
| US | 2021-0410122 | A1 | 30 December 2021 | AU | 2019-440085 | A1 | 22 July 2021 |
| | | | | CN | 113661752 | A | 16 November 2021 |
| | | | | CN | 115066022 | A | 16 September 2022 |
| | | | | CN | 115066022 | B | 18 April 2023 |
| | | | | EP | 3895489 | A1 | 20 October 2021 |
| | | | | EP | 3895489 | A4 | 03 August 2022 |
| | | | | KR | 10-2021-0146880 | A | 06 December 2021 |
| | | | | WO | 2020-199120 | A1 | 08 October 2020 |
| WO | 2015-083914 | A1 | 11 June 2015 | AU | 2014-360116 | A1 | 30 June 2016 |
| | | | | CA | 2933030 | A1 | 11 June 2015 |
| | | | | EP | 3090365 | A1 | 09 November 2016 |
| | | | | KR | 10-2016-0096593 | A | 16 August 2016 |
| | | | | US | 10200224 | B2 | 05 February 2019 |
| | | | | US | 2016-0314500 | A1 | 27 October 2016 |
| | | | | US | 2018-0167821 | A1 | 14 June 2018 |
| | | | | WO | 2015-085301 | A1 | 11 June 2015 |
| WO | 2022-139512 | A1 | 30 June 2022 | KR | 10-2023-0122149 | A | 22 August 2023 |
| EP | 4021128 | A1 | 29 June 2022 | KR | 10-2021-0036782 | A | 05 April 2021 |
| | | | | KR | 10-2021-0036788 | A | 05 April 2021 |
| | | | | KR | 10-2021-0036792 | A | 05 April 2021 |
| | | | | US | 2022-0353893 | A1 | 03 November 2022 |
| | | | | WO | 2021-060935 | A1 | 01 April 2021 |
| US | 2020-0236692 | A1 | 23 July 2020 | CN | 113366792 | A | 07 September 2021 |
| | | | | EP | 3857808 | A1 | 04 August 2021 |
| | | | | US | 11375518 | B2 | 28 June 2022 |
| | | | | WO | 2020-153783 | A1 | 30 July 2020 |

Form PCT/ISA/210 (patent family annex) (July 2022)